# EUROPÄISCHE PATENTANMELDUNG

(11) **EP 4 775 966 A1**
(43) Veröffentlichungstag der Anmeldung: **15.07.2026**
(21) Anmeldenummer: 25151792.6
(22) Anmeldetag: 14.01.2025
(51) Int. Cl.: G01N 21/89, G01N 21/952, G01N 21/892

(54) **VORRICHTUNG UND VERFAHREN ZUM DETEKTIEREN VON FEHLSTELLEN AN EINEM STRANGFÖRMIGEN PRODUKT**

(71) Anmelder: SIKORA AG, 28307 Bremen (DE)
(72) Erfinder: Schuh, Kolja Tobias, 28307 Bremen (DE)
(74) Vertreter: Hauck Patent- und Rechtsanwälte PartmbB

(57) **Zusammenfassung**

Die Erfindung betrifft eine Vorrichtung zum Detektieren von Fehlstellen an einem in einem Messbereich der Vorrichtung angeordneten strangförmigen Produkt, wobei die Vorrichtung eine in einer ersten Ausdehnungsrichtung ausgedehnte erste Lichtquelle aufweist, die ausgehend von einer Vielzahl von Orten entlang der ersten Ausdehnungsrichtung Licht, vorzugsweise sichtbares Licht oder Infrarotlicht, diffus auf den Messbereich abstrahlt, wobei die Vorrichtung weiter einen ersten Sensor aufweist, der die Quantität des von der ersten Lichtquelle abgestrahlten Lichts nach Durchstrahlen des Messbereichs erfasst, und wobei eine Auswerteeinrichtung vorgesehen ist, die dazu ausgebildet ist, eine Änderung der von dem ersten Sensor erfassten Quantität des Lichts als Fehlstelle des Produkts zu erkennen. Die Erfindung betrifft außerdem ein entsprechendes Verfahren.

## Beschreibung

Die Erfindung betrifft eine Vorrichtung zum Detektieren von Fehlstellen an einem in einem Messbereich der Vorrichtung angeordneten strangförmigen Produkt. Die Erfindung betrifft außerdem ein Verfahren zum Detektieren von Fehlstellen an einem strangförmigen Produkt.

Strangförmige Produkte mit beispielsweise rundem Querschnitt, wie Kabel oder Rohre, werden in der Regel unmittelbar nach ihrer Produktion, beispielsweise in einer Extrusionsanlage, auf Fehlstellen untersucht. Das Produkt ist abgesehen von etwaigen Fehlstellen homogen in Förderrichtung. Bei den Fehlstellen kann es sich beispielsweise um Ablagerungen, lokale Verbreiterungen oder Einschnürungen handeln. Die Detektion von Fehlstellen soll berührungslos und während der Förderung des Produkts durch einen Messbereich erfolgen.

Derzeit werden solche Produkte mittels Messung des Schattenwurfs des zu messenden Produkts auf einem Detektor, beispielsweise einem Fotodetektor, untersucht, wobei kollimierte oder divergente Lichtquellen zum Einsatz kommen. Auf dem Detektor wird der Schattenwurf abgebildet und aus Veränderungen des Schattenbildes auf eine Fehlstelle geschlossen. Dabei besteht das Problem, dass über den Umfang des Produkts lokal auftretende Fehlstellen abhängig von ihrer Größe den Schattenwurf nur beeinflussen, wenn sie passend zur Lichtquelle positioniert sind. Abhängig von der Größe der Fehlstelle relativ zum Querschnitt des Produkts ergeben sich mit abnehmender Fehlergröße abnehmende Detektionsbereiche. Um dieses Problem zu lösen, ist vorgeschlagen worden, eine Mehrzahl entsprechender Detektionssysteme zu kombinieren. Es können allerdings bis zu zwölf derartiger Detektionssysteme erforderlich sein, um einen lokalen Fehler mit einer Höhe von einem Hundertstel des Produktradius unabhängig von dessen Position über den Umfang des Produkts sicher zu detektieren. Dies ist mit erheblichem Aufwand und entsprechenden Kosten verbunden. Übliche Detektionsgeräte umfassen daher in der Regel nur bis zu drei solcher Detektionssysteme und können entsprechend lediglich lokale Fehler mit einer Höhe ab etwa einem Fünftel des Produktradius zuverlässig positionsunabhängig detektieren. Eine andere Möglichkeit würden kamerabasierte Systeme darstellen. Diese sind allerdings noch aufwendiger und entsprechend mit noch höheren Kosten verbunden.

Ausgehend von dem erläuterten Stand der Technik liegt der Erfindung die Aufgabe zugrunde, eine Vorrichtung und ein Verfahren der eingangs genannten Art bereitzustellen, mit denen auch kleine Fehlstellen eines Produkts möglichst positionsunabhängig in einfacher und zuverlässiger Weise detektiert werden können.

Die Erfindung löst die Aufgabe durch die unabhängigen Ansprüche 1 und 15. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass die Vorrichtung eine in einer ersten Ausdehnungsrichtung ausgedehnte erste Lichtquelle aufweist, die ausgehend von einer Vielzahl von Orten entlang der ersten Ausdehnungsrichtung Licht diffus auf den Messbereich abstrahlt, dass die Vorrichtung weiter einen ersten Sensor aufweist, der die Quantität des von der ersten Lichtquelle abgestrahlten Lichts nach Durchstrahlen des Messbereichs erfasst, und dass eine Auswerteeinrichtung vorgesehen ist, die dazu ausgebildet ist, eine Änderung der von dem ersten Sensor erfassten Quantität des Lichts als Fehlstelle des Produkts zu erkennen.

Bei dem strangförmigen Produkt kann es sich beispielsweise um ein Produkt mit einem teils oder vollständig konvexen Querschnitt, insbesondere einem teils oder vollständig kreisförmigen Querschnitt, handeln. Wie ebenfalls erläutert, kann es sich bei dem Produkt beispielsweise um ein Kabel oder ein Rohr handeln. Das Produkt kann teilweise oder vollständig aus einem Kunststoff bestehen. Das Produkt ist ohne Fehlstellen homogen in seiner Längsrichtung, die beispielsweise einer Förderrichtung entsprechen kann. Es kann in einer Extrusionsvorrichtung hergestellt worden sein und mit der erfindungsgemäßen Vorrichtung bzw. dem erfindungsgemäßen Verfahren insbesondere direkt nach der Herstellung in der Extrusionsvorrichtung vermessen werden und hierzu, wie nachfolgend erläutert, durch den Messbereich der Vorrichtung gefördert werden. Wie ebenfalls erläutert, kann es sich bei den zu detektierenden Fehlstellen beispielsweise um Ablagerungen, lokale Verbreiterungen oder Einschnürungen handeln. Die erfindungsgemäße Detektion erfolgt berührungslos.

Der erfindungsgemäße Ansatz nutzt grundsätzlich ebenfalls eine durch eine Fehlstelle des Produkts verursachte Veränderung des Schattenwurfs des im Messbereich angeordneten Produkts auf dem ersten Sensor aus, vermeidet bzw. reduziert allerdings das eingangs erläuterte Problem der mit kleiner werdenden Fehlstellen abnehmenden Detektionsbereiche. Zu diesem Zweck wird anstelle einer kollimierten Lichtquelle, die eine scharfe Abbildung auf dem ersten Sensor erzeugt, eine über einen großen Bereich ausgedehnte erste Lichtquelle mit diffuser Abstrahlung verwendet. Die erste Lichtquelle sendet von einer Vielzahl von Orten entlang einer ersten Ausdehnungsrichtung Licht über einen großen Winkelbereich mit möglichst gleichbleibender Intensität aus. Die diffuse Lichtstrahlung bewirkt zwar gegenüber dem Stand der Technik einen Kontrastverlust, wenn eine Fehlstelle optimal zu dem Detektionssystem aus erster Lichtquelle und erstem Sensor positioniert ist, was die Anforderungen an die zu detektierenden Signaländerungen erhöht, um weiterhin die gleiche Fehlergröße wie im Stand der Technik detektieren zu können. Allerdings erlaubt es der erfindungsgemäße Ansatz, den Detektionsbereich für Fehlstellen über den Umfang des Produkts erheblich zu erweitern. In Abkehr von dem oben erläuterten Stand der Technik wird keine scharfe Abbildung eines Schattenwurfs auf dem ersten Sensor erzeugt, sondern der erste Sensor misst die insgesamt von diesem erfasste Lichtmenge nach Durchstrahlen des Messbereichs mit darin angeordnetem Produkt. Eine Fehlstelle führt zu einer Veränderung der vor dem ersten Sensor erfassten Lichtmenge, beispielsweise durch eine Veränderung des Querschnitts des Produkts im Falle einer lokalen Verbreiterung oder Einschnürung. Auf dieser Grundlage erkennt die Auswerteeinrichtung eine Änderung der von dem ersten Sensor erfassten Lichtmenge als Fehlstelle des Produkts. Es kann ein Grenzwert für eine Mindestveränderung der erfassten Lichtquantität vorgegeben sein, ab dem eine solche Änderung als Fehlstelle ausgegeben wird. Hierdurch können Fehlerkennungen aufgrund von äußeren Störungen oder einem Signalrauschen vermieden werden.

Die erste Lichtquelle erstreckt sich entlang einer ersten Ausdehnungsrichtung. Sie kann in einer flachen oder gekrümmten Ebene ausgedehnt sein, die die erste Ausdehnungsrichtung enthält. Eine Erstreckung der ersten Lichtquelle, und beispielsweise auch des ersten Sensors, in einer Richtung quer zum Messbereich bzw. quer zur Längsrichtung des zu vermessenden Produkts ist dabei bevorzugt größer als der Messbereich oder der Querschnitt des zu vermessenden Produkts. Auf diese Weise kann auch an dem Produkt vorbei gelangende Lichtstrahlung sicher erfasst werden. Der erste Sensor ist beispielsweise auf einer der ersten Lichtquelle gegenüberliegenden Seite des Messbereichs angeordnet. Die erste Ausdehnungsrichtung kann eine gerade Ausdehnungsrichtung oder eine gekrümmte Ausdehnungsrichtung sein. Auch Kombinationen von geraden und gekrümmten Abschnitten der Ausdehnungsrichtung oder Kombinationen von geraden Abschnitten unterschiedlicher Richtungen oder Kombinationen von gekrümmten Abschnitten mit unterschiedlichen Krümmungsradien sind möglich. Sofern die Ausdehnungsrichtung eine gerade Ausdehnungsrichtung ist, kann sie beispielsweise in einem Winkel zwischen 70° und 110°, insbesondere zwischen 80° und 100°, vorzugsweise 90°, zu der Längsrichtung des zu vermessenden strangförmigen Produkts ausgerichtet sein.

Der Abstrahlwinkel der ersten Lichtquelle bzw. die Anordnung von erster Lichtquelle zu erstem Sensor kann derart sein, dass die von der ersten Lichtquelle ausgesandte Lichtstrahlung den ersten Sensor bei nicht im Messbereich befindlichem Produkt vollständig abdeckt. Die diffuse Abstrahlung des Lichts von der ersten Lichtquelle erfolgt mit möglichst gleichförmiger Intensität. Erfindungsgemäß ist es somit möglich, auch kleine lokale Fehlstellen mit einer Höhe von weniger als einem Zehntel, vorzugweise weniger als einem Dreißigstel, weiter vorzugweise weniger als einem Hundertstel des Querschnitts des Produkts bzw. des Radius des Produkts über einen ausgedehnten Winkelbereich auf dem Umfang des Produkts von mehr als 90°, vorzugsweise mehr als 120°, weiter vorzugsweise mehr als 180°, zu detektieren und durch die Auswerteeinrichtung als Fehlstelle zu erkennen.

Der erfindungsgemäße Ansatz erfordert zwar im Vergleich zum Stand der Technik über einen größeren Bereich ausgedehnte Lichtquellen bzw. Sensoren, erlaubt dafür aber eine umfangreichere Detektion auch kleinerer Fehlstellen mit weniger Lichtquellen bzw. Sensoren und damit im Vergleich zum Stand der Technik in einfacherer und kostengünstigerer Weise.

Dem Problem eines geringeren Kontrasts durch die erfindungsgemäße Auswertung der Lichtmenge anstelle einer scharfen Abbildung des Schattenwurfs kann in unterschiedlicher Weise begegnet werden, wie nachfolgend noch näher erläutert. Beispielsweise kann bereits eine erhöhte Strahlungsleistung der ersten Lichtquelle dafür sorgen, dass ein relativ gesehen schwächeres Detektionssignal absolut stärker wird. Eine erhöhte Strahlungs- bzw. Lichtleistung bietet sich an, um das Nutzsignal gegenüber einem Rauschen zu verstärken. Die erfindungsgemäß eingesetzten Lichtquellen können beispielsweise mehrere Watt optischer Leistung aufweisen.

Die erfindungsgemäß nutzbaren Lichtquellen können Leuchtdioden (LEDs) oder Laserdioden umfassen. Als Sensoren kommen Fotodetektoren infrage beispielsweise CCD-Sensoren oder ausgedehnte Fotodioden. Bei den Sensoren kann es sich um Zeilensensoren oder beispielsweise zweidimensionale Sensorarrays handeln. Auch die Lichtquellen können sich im Wesentlichen zeilenförmig in der jeweiligen Ausdehnungsrichtung oder flächig in einer flachen oder gekrümmten Ebene erstrecken.

Nach einer Ausgestaltung kann die erste Lichtquelle sichtbares Licht oder Infrarotlicht aussenden. Infrarotlicht hat den Vorteil, dass aktuelle künstliche Lichtquellen für Umgebungslicht im Wesentlichen nur sichtbares Licht abstrahlen. Im Infrarotstrahlungsbereich liegen daher nur geringe Störungen durch Umgebungslicht vor.

Die erste Lichtquelle kann eine sich in der ersten Ausdehnungsrichtung erstreckende flächige Lichtquelle und/oder eine Mehrzahl von in der ersten Ausdehnungsrichtung nebeneinander angeordnete Einzellichtquellen umfassen. Eine flächige Ausbildung der Lichtquelle bedeutet, dass im Wesentlichen von jedem Punkt der Lichtquelle entlang der Ausdehnungsrichtung diffuses Licht abgestrahlt wird. Sofern die Lichtquelle aus mehreren Einzellichtquellen aufgebaut ist, strahlen die Einzellichtquellen entsprechend jeweils diffuses Licht ab.

Der erste Sensor kann sich nach einer weiteren Ausgestaltung in einer ersten Sensorausdehnungsrichtung erstrecken, beispielsweise auf einer der ersten Lichtquelle gegenüberliegenden Seite des Messbereichs. Die erste Sensorausdehnungsrichtung kann parallel zu der ersten Ausdehnungsrichtung verlaufen. Auch der Sensor kann sich in einer flachen oder gekrümmten Ebene erstrecken, die die erste Sensorausdehnungsrichtung enthält. Mit der vorgenannten Ausgestaltung wird eine besonders zuverlässige Erfassung des Lichts nach Durchstrahlen des Messbereichs mit darin angeordnetem Produkt erreicht. Auch die erste Sensorausdehnungsrichtung kann eine gerade Sensorausdehnungsrichtung oder eine gekrümmte Sensorausdehnungsrichtung sein. Auch Kombinationen von geraden oder gekrümmten Abschnitten der ersten Sensorausdehnungsrichtung oder Kombinationen von geraden Abschnitten unterschiedlicher Richtungen oder Kombinationen von gekrümmten Abschnitten mit unterschiedlichen Krümmungsradien sind möglich.

Nach einer weiteren Ausgestaltung kann vorgesehen sein, dass die Vorrichtung weiterhin eine sich in einer zweiten Ausdehnungsrichtung erstreckende zweite Lichtquelle umfasst, die ausgehend von einer Vielzahl von Orten entlang der zweiten Ausdehnungsrichtung Licht diffus auf den Messbereich abstrahlt, dass die Vorrichtung weiter einen zweiten Sensor aufweist, der die Quantität des von der zweiten Lichtquelle abgestrahlten Lichts nach Durchstrahlen des Messbereichs erfasst, und dass die Auswerteeinrichtung dazu ausgebildet ist, eine Änderung der von dem zweiten Sensor erfassten Quantität des Lichts als Fehlstelle des Produkts zu erkennen.

Bei dieser Ausgestaltung sind zwei Lichtquellen-Sensorpaare vorgesehen, die das in dem Messbereich angeordnete Produkt aus unterschiedlichen Richtungen beleuchten bzw. die entsprechende Lichtstrahlung detektieren. Der zweite Sensor kann wiederum auf der der zweiten Lichtquelle gegenüberliegenden Seite des Messbereichs angeordnet sein. Der zweite Sensor kann sich in einer zweiten Sensorausdehnungsrichtung erstrecken. Die zweite Sensorausdehnungsrichtung kann parallel zu der zweiten Ausdehnungsrichtung verlaufen. Für die zweite Ausdehnungsrichtung und die zweite Sensorausdehnungsrichtung geht das zu der ersten Ausdehnungsrichtung bzw. zu der ersten Sensorausdehnungsrichtung Gesagte. Durch die Verwendung zweier Lichtquellen-Sensorpaare kann der Erfassungsbereich von Fehlstellen über den Umfang des Produkts erweitert werden. Bei geeigneter Anordnung der Lichtquellensensorpaare kann bereits mit zwei solchen Paaren eine Detektion von Fehlstellen über den gesamten Umfang des Produkts zuverlässig erfolgen. Die Lichtquellen-Sensorpaare können in unterschiedlichen Ebenen angeordnet sein, insbesondere in Längsrichtung bzw. Förderrichtung des zu messenden Produkts versetzt. Auch die zweite Lichtquelle kann sichtbares Licht oder Infrarotlicht aussenden. Weiterhin kann auch die zweite Lichtquelle eine sich in der zweiten Ausdehnungsrichtung erstreckende flächige Lichtquelle und/oder eine Mehrzahl von in der zweiten Ausdehnungsrichtung nebeneinander angeordneten Einzellichtquellen umfassen. Es können auch mehr als zwei Lichtquellen-Sensorpaare vorgesehen sein, beispielsweise drei Lichtquellen-Sensorpaare. Die Lichtquellen-Sensorpaare können sämtlich in unterschiedlichen Ebenen angeordnet sein, insbesondere in Längsrichtung bzw. Förderrichtung des zu messenden Produkts versetzt.

Nach einer weiteren Ausgestaltung können die erste und zweite Lichtquelle ein im Messbereich angeordnetes Produkt über einen Winkelbereich von mindestens 270°, vorzugsweise 360°, über den Umfang des Produkts diffus mit Licht bestrahlen. Der erste und zweite Sensor empfangen das von den Lichtquellen ausgesandte und auf die Sensoren auftreffende Licht entsprechend. Indem sich die erste Lichtquelle und die zweite Lichtquelle jeweils quer zum Messbereich bzw. der Längsrichtung des Produkts beispielsweise über einen größeren Bereich erstrecken als der Querschnitt des zu messenden Produkts bzw. des Messbereichs, und indem die erste und zweite Lichtquelle jeweils diffuses Licht in einem großen Winkelbereich abstrahlen, kann eine Beleuchtung des im Messbereich befindlichen Produkts über seinen gesamten Umfang und entsprechend eine Detektion von Fehlstellen über den gesamten Produktumfang erreicht werden. Wie bereits erläutert, können die erste Ausdehnungsrichtung und die zweite Ausdehnungsrichtung gerade Ausdehnungsrichtungen sein. Sie können dann unter einem Winkel zwischen 70° und 110°, beispielsweise von etwa 90°, zueinander ausgerichtet sein. Auch die erste Sensorausdehnungsrichtung und die zweite Sensorausdehnungsrichtung können wie erläutert gerade Sensorausdehnungsrichtungen sein, die dann unter einem Winkel zwischen 70° und 110°, beispielsweise etwa 90°, zueinander ausgerichtet sein können. Die erste und zweite Lichtquelle zusammen mit den ersten und zweiten Sensoren können ein insbesondere vollständiges Quadrat um den Messbereich bzw. das zu vermessende Produkt bilden. Für eine vollständige Bestrahlung räumlich ausgedehnter Produkte über einen Umfangsbereich von 360° kann ein räumlicher Überlapp der Ausdehnungsrichtungen der Lichtquellen einerseits und der Sensorausdehnungsrichtungen andererseits bestehen. Zu diesem Zweck kann aus Bauraumgründen vorgesehen sein, dass das erste Lichtquellen-Sensorpaar aus erster Lichtquelle und erstem Sensor und das zweite Lichtquellen-Sensorpaar aus zweiter Lichtquelle und zweitem Sensor in unterschiedlichen Ebenen angeordnet sind, versetzt in Längsrichtung bzw. Förderrichtung des zu messenden Produkts. Das erste Paar aus der ersten Lichtquelle und dem ersten Sensor sowie das zweite Paar aus der zweiten Lichtquelle und dem zweiten Sensor können grundsätzlich in gleicher Weise ausgebildet und angeordnet sein, lediglich um einen bestimmten Winkel, zum Beispiel zwischen 70° und 110°, vorzugsweise zwischen 80° und 100°, weiter vorzugsweise von 90°, zueinander gedreht.

Die Vorrichtung kann weiter eine Fördereinrichtung umfassen, die das strangförmige Produkt während der Messung entlang einer Förderrichtung durch den Messbereich fördert. Die Förderrichtung kann in Längsrichtung des strangförmigen Produkts verlaufen. Wie bereits erwähnt, kann das Produkt in einer Extrusionsvorrichtung hergestellt worden sein. Es kann mit der erfindungsgemäßen Vorrichtung bzw. dem erfindungsgemäßen Verfahren dann im Anschluss an die Extrusionsvorrichtung direkt vermessen werden. Die Extrusionsvorrichtung kann Teil der erfindungsgemäßen Vorrichtung sein.

Die Vorrichtung kann weiterhin einen in Förderrichtung des strangförmigen Produkts stromab des ersten Sensors angeordneten weiteren Sensor aufweisen, der ebenfalls die Quantität des von der ersten Lichtquelle abgestrahlten Lichts nach Durchstrahlen des Messbereichs erfasst. Die Auswerteeinrichtung kann dann dazu ausgebildet sein, ein Differenzsignal des ersten Sensors und des weiteren Sensors auszuwerten. Durch die Anordnung zweier Sensoren in Förderrichtung des Produkts hintereinander und die Auswertung des Differenzsignals zwischen den Messsignalen der Sensoren wird zum einen eine Störwirkung durch Fremdlicht, also nicht von den erfindungsgemäßen Lichtquellen ausgesandtem Licht, reduziert, da solches Fremdlicht beide Sensoren zumindest ähnlich betrifft, wohingegen ein durch eine Fehlstelle erzeugtes Fehlersignal bei kurzen Fehlern nur jeweils einen Sensor abschattet und im Falle von ausgedehnten Fehlstellen nach Eintritt in den Messbereich zunächst einen der Sensoren und im Zuge des Austritts noch den anderen der Sensoren betrifft. Zusätzlich ermöglicht diese Ausgestaltung eine Reduzierung von störenden Effekten, die durch eine Positionsänderung des Produkts, beispielsweise ein Oszillieren des Produkts, in Verbindung mit einer inhomogenen Beleuchtung hervorgerufen werden können, solange eine solche Inhomogenität beide Sensoren zumindest ähnlich betrifft. Der weitere Sensor ist getrennt von dem ersten Sensor ausgebildet und beabstandet zu diesem angeordnet. Der weitere Sensor kann ausgebildet und angeordnet sein wie der erste Sensor. Er ist lediglich in Längsrichtung bzw. Förderrichtung des Produkts beabstandet zu diesem positioniert. Natürlich könnte auch einem zweiten Sensor ein solcher in Förderrichtung des strangförmigen Produkts stromab des zweiten Sensors angeordneter weiterer Sensor zugeordnet sein, der ebenfalls die Quantität des von der zweiten Lichtquelle abgestrahlten diffusen Lichts nach Durchstrahlen des Messbereichs erfasst. Die Auswerteeinrichtung könnte dann ausgebildet sein, ein Differenzsignal des zweiten Sensors und des diesem zugeordneten weiteren Sensors entsprechend auszuwerten.

Nach einer weiteren Ausgestaltung kann vorgesehen sein, dass die erste Lichtquelle sich über den gesamten Umfang des Messbereichs erstreckt, und dass der erste Sensor sich über den gesamten Umfang des Messbereichs erstreckt, wobei sich die erste Lichtquelle und der erste Sensor in unterschiedlichen Ebenen erstrecken, insbesondere versetzt in Längsrichtung des Produkts. Wie oben erläutert, kann das vollständige Vermessen des Produkts über seinen Umfang bei Vorsehen zweier Lichtquellen-Sensorpaare einen räumlichen Überlapp von Lichtquellen bzw. Sensoren erfordern. Dies wiederum macht relativ lange bzw. große Lichtquellen bzw. Sensoren erforderlich. Eine Alternative, die die Verwendung kürzerer bzw. kleinerer Lichtquellen und Sensoren erlaubt, wäre die Verwendung dreier Lichtquellen-Sensorpaare, die bei geeigneter Anordnung um das Produkt dieses über den gesamten Umfang vermessen können. Dies kann aus Bauraumgründen jedoch die Anordnung der drei Lichtquellen-Sensorpaare in drei unterschiedlichen Ebenen erforderlich machen, wodurch der Bauraum der Vorrichtung insgesamt unerwünscht ansteigt. Die vorgenannte Ausgestaltung, bei der sich die erste Lichtquelle und der erste Sensor vollständig um den Messbereich erstrecken, machen eine vollständige Vermessung des Produkts über seinen gesamten Umfang in nur zwei Ebenen möglich, die insbesondere senkrecht zur Längsrichtung bzw. Förderrichtung des Produkts ausgerichtet sein können. Die erste Lichtquelle ist auf die Ebene des ersten Sensors ausgerichtet, wobei die Beleuchtung das Messfeld aus allen Richtungen beleuchtet.

Die erste Lichtquelle kann sich kreisförmig um den Messbereich erstrecken und der erste Sensor kann sich dreiecksförmig um den Messbereich erstrecken, beispielsweise in einem gleichseitigen Dreieck. Eine symmetrische Anordnung von Lichtquelle und Sensor könnte ungünstig hinsichtlich Abschattungen sein. Darüber hinaus kann der erste Sensor in konstruktiv einfacher Weise aus drei, sich jeweils entlang einer Gerade erstreckenden Sensorabschnitten als Dreieck aufgebaut werden. Die erste Lichtquelle kann aus Einzellichtquellen aufgebaut sein. Die Einzellichtquellen können zur Realisierung der Kreisform in besonders einfacher Weise kreisförmig angeordnet sein.

Nach einer weiteren Ausgestaltung kann eine Blende vorgesehen sein, die einen Teil des von der ersten und/oder zweiten Lichtquelle abgestrahlten Lichts ausblendet, sodass dieses den ersten und/oder zweiten Sensor nicht erreicht. Wie nachfolgend noch näher erläutert, können unterschiedlich ausgebildete und angeordnete Blenden zum Einsatz kommen. Der Verwendung sämtlicher Blenden liegt der Gedanke zugrunde, dass zu einer relevanten Signaländerung durch eine Fehlstelle nur Licht beiträgt, das nahe an dem Produkt vorbei oder auf das Produkt gelangt, da nur dieses Licht durch entsprechende Veränderungen auf dem Produkt abgeschattet bzw. im Fall fehlenden Querschnitts nicht abgeschattet wird. Lichtwege, die außerhalb dieses gewünschten Messfeldes verlaufen, tragen nicht zum Nutzsignal, also Änderungen durch Fehlstellen, bei, wohl aber zum Gesamtsignal. Sie verringern dadurch den Kontrast und erschweren die Detektion von Fehlstellen. Entsprechend kann das Gesamtsignal durch den Einsatz von Blenden, die nur solche Lichtwege verdecken, die nicht zum Nutzsignal beitragen, reduziert werden, ohne dass das Nutzsignal selbst beeinträchtigt ist. Sofern weitere Sensoren vorgesehen sind, können diesen auch entsprechende Blenden zugeordnet sein. Um einer bei Blenden verringerten Gesamtlichtmenge entgegenzuwirken, können bei Bedarf stärkere Lichtquellen eingesetzt werden. Grundsätzlich sind alternativ zu Blenden auch andere optische Elemente denkbar, die die Abstrahlung des diffusen Lichts auf den Messbereich beschränken, beispielsweise Linsen.

Nach einer Ausgestaltung kann die Blende den Messbereich direkt begrenzen. Die Blende kann sich in der ersten oder der zweiten Ausdehnungsrichtung erstrecken. Sie kann den Messbereich seitlich begrenzen. Hierzu kann die Blende in einer Messebene des Messbereichs, insbesondere in einer durch ein Zentrum des Messbereichs verlaufenden Ebene angeordnet sein. Sie kann zum Beispiel eine schlitzförmige Blendenöffnung umfassen. Eine Blende in der Messebene bzw. der Produktebene stellt eine besonders einfache Möglichkeit des Ausblendens nicht gewünschter Strahlung dar. Dabei muss der Abstand der Blendenwände bzw. -kanten vom Messbereich groß genug sein, sodass nur die jeweils gewünschten Lichtwege durch die Blende verdeckt werden.

Eine weitere Möglichkeit besteht darin, Einzellichtquellen der ersten und/oder zweiten Lichtquelle eine Mehrzahl von Blenden zuzuordnen, die jeweils einen Teil des von der ersten und/oder zweiten Lichtquelle abgestrahlten Lichts ausblenden, sodass dieses den ersten und/oder zweiten Sensor nicht erreicht. Diese aufwendigere Möglichkeit der Ausblendung bietet sich bei einer Mehrzahl punktueller Einzellichtquellen an. Solche Einzelblenden sorgen dafür, dass die entsprechenden Einzellichtquellen nur in einen bestimmten Bereich, insbesondere den Messbereich, Licht abstrahlen. Diese Ausgestaltung ist zwar im Vergleich zu einer einzelnen Blende in der Messebene aufwendiger, bietet aber die Möglichkeit, für jede Einzellichtquelle eine individuell optimierte Blende verwenden zu können, anstelle einer gemeinsamen Blende für die gesamte Beleuchtung.

Eine weitere Möglichkeit ist die Anordnung einer Blende in Längsrichtung bzw. in Förderrichtung des strangförmigen Produkts. Durch diesen Ansatz kann die relative Signalstärke von in Längs- bzw. Förderrichtung des Produkts kurzen Fehlstellen erhöht werden. Dadurch wird die betrachtete Länge des Produkts reduziert, damit der Anteil des fehlerbehafteten Bereichs des Produkts in dem durch den Sensor erkennbaren Bereich erhöht und entsprechend eine relativ höhere Signaländerung erzeugt.

Nach einer weiteren Ausgestaltung kann vorgesehen sein, dass dem ersten und/oder zweiten Sensor ein Spektralfilter zum Ausfiltern von Umgebungslicht zugeordnet ist und/oder dass dem ersten und/oder zweiten Sensor ein Frequenzfilter zum Ausfiltern eines Frequenzbereichs des empfangenen Lichts zugeordnet ist. Der erfindungsgemäße Ansatz weist grundsätzlich eine Empfindlichkeit gegenüber Änderungen des Umgebungslichts auf, da diese sich aufgrund der Auswertung der Lichtmenge anstelle einer scharfen Abbildung des Schattenwurfs nicht zwingend von einer Änderung der Abschattung unterscheiden lassen. Um diesen Effekt zu reduzieren, können spektrale Filter eingesetzt werden, die Licht der gewünschten Beleuchtung durch die Lichtquellen durchlassen und einen möglichst großen Teil des Umgebungslichts herausfiltern. Da sich Raumbeleuchtung mittlerweile weitgehend auf das sichtbare Spektrum des Lichts begrenzt, ist dieser Ansatz besonders wirksam, wenn die Lichtquellen Licht im nicht sichtbaren Spektralbereich aussenden. Ist darüber hinaus die Fördergeschwindigkeit des Produktes durch den Messbereich bekannt, kann ein erwarteter Frequenzbereich für das durch eine Fehlstelle erzeugte Fehlersignal bestimmt werden. Signale außerhalb dieses erwarteten Frequenzbereichs können entsprechend ignoriert werden. Hierzu können Frequenzfilter eingesetzt werden. Dies reduziert die Empfindlichkeit gegenüber Fremdlichtänderungen und gegenüber Positionsänderungen des Produkts. Sofern dem ersten und/oder zweiten Sensor weitere Sensoren zugeordnet sind, können diesen ebenfalls Spektralfilter und/oder Frequenzfilter zugeordnet sein.

Nach einer weiteren Ausgestaltung kann das von der ersten und/oder zweiten Lichtquelle abgestrahlte Licht moduliertes Licht, insbesondere frequenzmoduliertes Licht, sein, und das von dem ersten und/oder zweiten Sensor empfangene Messsignal entsprechend demodulierbar, insbesondere frequenzdemodulierbar, sein bzw. demoduliert, insbesondere frequenzdemoduliert werden. Diese Ausgestaltung stellt eine weitere Möglichkeit dar, den unerwünschten Einfluss von Umgebungslicht zu reduzieren, indem die Beleuchtung moduliert wird. Dadurch wird beispielsweise ein Frequenzbereich des unerwünschten Umgebungslichts effektiv aus dem auszuwertenden Frequenzbereich der gewünschten Beleuchtung transformiert.

Nach einer weiteren Ausgestaltung kann vorgesehen sein, dass die erste Lichtquelle eine Mehrzahl von in der ersten Ausdehnungsrichtung nebeneinander angeordneten Einzellichtquellen umfasst und/oder dass die zweite Lichtquelle eine Mehrzahl von in der zweiten Ausdehnungsrichtung nebeneinander angeordneten Einzellichtquellen umfasst, dass das Licht unterschiedlicher Einzellichtquellen unterschiedlich moduliert, insbesondere frequenzmoduliert, ist, und dass das von dem ersten und/oder zweiten Sensor empfangene Messsignal unterschiedlich demodulierbar, insbesondere frequenzdemodulierbar, ist bzw. unterschiedlich demoduliert, insbesondere unterschiedlich frequenzdemoduliert wird. Bei Einsatz mehrerer Einzellichtquellen können für unterschiedliche Lichtquellen beispielsweise unterschiedliche Modulationsfrequenzen verwendet werden. Beispielsweise kann jede Einzellichtquelle unterschiedlich moduliert werden. Dies erlaubt es, durch eine beliebige Einzellichtquelle hervorgerufene Signale durch entsprechende Demodulation des zugeordneten Sensors von übrigen Signalen zu trennen und somit separat auszuwerten. Dementsprechend kann in jedem dieser Signalteile nach einer Fehlstellensignatur gesucht werden. Abhängig von der Position der Fehlstelle tragen die Fehlersignaturen unterschiedlich stark zu einzelnen Signalen bei. Daher ist die relative Signalstärke eines oder mehrerer dieser Teilsignale größer als die des Gesamtsignals, sodass eine Fehlersignatur in zumindest einem Teilsignal einfacher zu identifizieren ist. Sofern weitere Sensoren vorgesehen sind, kann die vorgenannte Ausstattung auch für diese gelten.

Nach einer weiteren Ausgestaltung können der erste Sensor und/oder der zweite Sensor einen Spiegel aufweisen, der Licht zu dem ersten Sensor und/oder dem zweiten Sensor reflektiert. Sofern weitere Sensoren vorgesehen sind, können diese ebenfalls solche Spiegel aufweisen. Die erfindungsgemäße Auswertung setzt relativ große Sensoren voraus. Um die absolute Größe der Sensoren gleichwohl zu begrenzen, können Spiegel eingesetzt werden, die die effektive Sensorgröße erhöhen. Dies ist erfindungsgemäß möglich, da es für die Erfindung keine Rolle spielt, auf welchen Ort des Sensors genau Licht nach Durchstrahlen des Messbereichs fällt. Vielmehr wird die von diesem erfasste Gesamtlichtmenge ausgewertet. Etwaige Spiegel können dabei so konzipiert sein, dass im Wesentlichen sämtliches Licht, das durch den Messbereich gelangt und nicht direkt auf den Detektor gelangt, durch die Spiegel auf den Detektor gelenkt wird.

Die Erfindung löst die Aufgabe außerdem durch ein Verfahren zum Detektieren von Fehlstellen an einem strangförmigen Produkt unter Verwendung einer erfindungsgemäßen Vorrichtung. Die Vorrichtung kann entsprechend zur Durchführung des erfindungsgemäßen Verfahrens ausgebildet sein.

Ausführungsbeispiele der Erfindung werden nachfolgend näher erläutert. Es zeigen schematisch:
- Figur 1: eine konventionelle Vorrichtung zum Detektieren von Fehlstellen an einem strangförmigen Produkt,
- Figur 2: ein Diagramm zur Erläuterung von Messergebnissen der Vorrichtung nach Figur 1,
- Figur 3: eine erfindungsgemäße Vorrichtung zum Detektieren von Fehlstellen an einem strangförmigen Produkt,
- Figur 4: ein Diagramm zur Erläuterung von Messergebnissen der Vorrichtung nach Figur 3,
- Figur 5: ein weiteres Diagramm mit Messergebnissen der in Figur 3 dargestellten Vorrichtung,
- Figur 6: eine weitere Ausgestaltung der erfindungsgemäßen Vorrichtung,
- Figur 7: eine weitere Ausgestaltung der erfindungsgemäßen Vorrichtung,
- Figur 8: eine weitere Ausgestaltung der erfindungsgemäßen Vorrichtung,
- Figur 9: eine weitere Ausgestaltung der erfindungsgemäßen Vorrichtung, und
- Figur 10: eine weitere Ausgestaltung der erfindungsgemäßen Vorrichtung.

Soweit nicht anderes angegeben ist, bezeichnen in den Figuren gleiche Bezugszeichen gleiche Gegenstände.

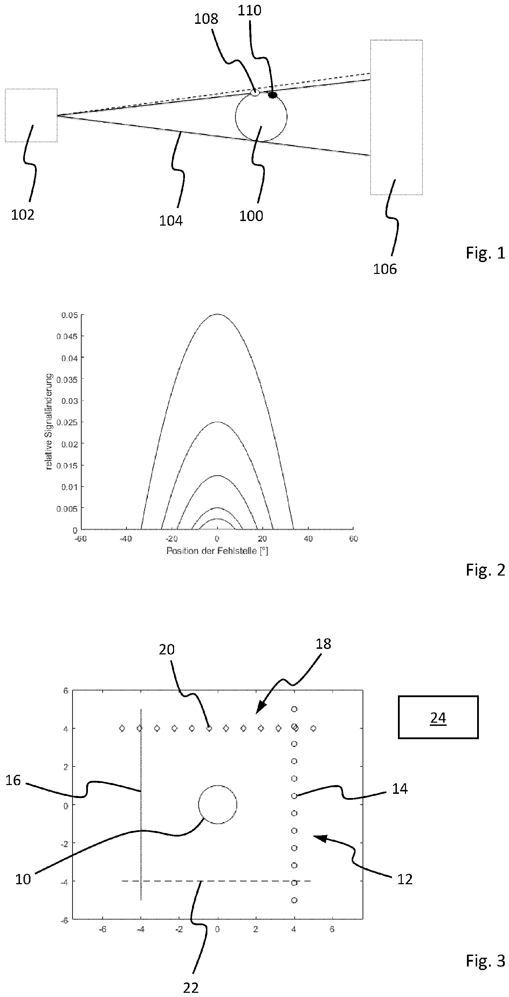

Die in Figur 1 dargestellte konventionelle Vorrichtung zum Detektieren einer Fehlstelle an einem strangförmigen Produkt 100 umfasst eine Lichtquelle 102, die divergentes Licht 104 auf das Produkt 100 aussendet. Der Lichtquelle 102 gegenüberliegend ist ein Detektor 106 angeordnet, der das von der Lichtquelle 102 ausgesandte Licht empfängt. In dem in Figur 1 dargestellten Aufbau sind beispielhaft zwei Fehlstellen 108, 110 am Umfang des Produkts 100 dargestellt. Wie in Figur 1 zu erkennen, ändert die Fehlstelle 108 aufgrund ihrer Position den auf dem Sensor 106 erzeugten Schattenwurf, die Fehlstelle 110 aufgrund ihrer Position hinter dem Horizont der Lichtquelle 102 hingegen nicht.

In Figur 2 ist dies beispielhaft in einem Diagramm dargestellt, wobei jeweils die auf dem Sensor 106 durch eine Fehlstelle erzeugte relative Signaländerung über der Winkelposition der Fehlstelle in Grad für verschiedene Fehlstellenradien dargestellt ist. Die erzeugte relative Signaländerung nimmt mit abnehmender Größe der Fehlstelle entsprechend ab. Es ist auch zu erkennen, dass der zu erkennende Winkelbereich der Anordnung der Fehlstelle mit abnehmender Fehlstellengröße ebenfalls geringer wird.

Figur 3 zeigt eine erfindungsgemäße Vorrichtung nach einem ersten Ausführungsbeispiel, wobei in einem zentralen Messbereich der Vorrichtung ein sich in Figur 3 in die Zeichenebene hinein erstreckendes strangförmiges Produkt 10 mit in dem Beispiel kreisrundem Querschnitt dargestellt ist. Bei dem Produkt 10 kann es sich beispielsweise um ein Kabel oder ein Rohr handeln. Das Produkt 10 kann während des Vermessens mittels einer nicht näher dargestellten Fördereinrichtung entlang seiner Längsachse durch den Messbereich der Vorrichtung gefördert werden, in Figur 3 in die Zeichenebene hinein.

Die erfindungsgemäße Vorrichtung umfasst eine erste Lichtquelle 12, die in dem dargestellten Beispiel eine Mehrzahl von sich entlang einer ersten Ausdehnungsrichtung, in Figur 3 in vertikaler Richtung, erstreckend angeordnete Einzellichtquellen 14 umfasst. Auf der der ersten Lichtquelle 12 gegenüberliegenden Seite des Messbereichs bzw. des Produkts 10 befindet sich ein sich in einer ersten Sensorausdehnungsrichtung erstreckender erster Sensor 16. Die erste Sensorausdehnungsrichtung ist in dem dargestellten Beispiel parallel zu der ersten Ausdehnungsrichtung der ersten Lichtquelle 12. Die Vorrichtung umfasst darüber hinaus eine zweite Lichtquelle 18, die eine Mehrzahl von sich entlang einer zweiten Ausdehnungsrichtung, in Figur 3 in horizontaler Richtung, erstreckend angeordnete Einzellichtquellen 20 umfasst. Auf der der zweiten Lichtquelle 20 gegenüberliegenden Seite des Messbereichs bzw. des Produkts 10 befindet sich ein sich entlang einer zweiten Sensorausdehnungsrichtung erstreckender zweiter Sensor 22. Die zweite Sensorausdehnungsrichtung ist parallel zu der zweiten Ausdehnungsrichtung der zweiten Lichtquelle 18 angeordnet. Außerdem ist in Figur 3 zu erkennen, dass die erste Ausdehnungsrichtung und die erste Sensorausdehnungsrichtung senkrecht zu der zweiten Ausdehnungsrichtung und der zweiten Sensorausdehnungsrichtung angeordnet sind, sodass die ersten und zweiten Lichtquellen 12, 18 gemeinsam mit den ersten und zweiten Sensoren 16, 22 den Messbereich bzw. das zu vermessende Produkt 10 quadratisch einrahmen. Die erste und zweite Lichtquelle 12, 18 sowie der erste und zweite Sensor 16, 22 erstrecken sich dabei jeweils quer zur Längsrichtung des Produkts 10 über einen erheblich größeren Bereich als der Messbereich bzw. der Querschnitt des Produkts 10. Weiter ist in Figur 3 zu erkennen, dass die erste Lichtquelle 12 und die zweite Lichtquelle 18 räumlich überlappen, vorliegend im oberen rechten Bereich des gebildeten Quadrats kreuzen. Auch der erste Sensor 16 und der zweite Sensor 22 überlappen sich, vorliegend im linken unteren Bereich des Quadrats. Aus Bauraumgründen ist das erste Lichtquellen-Sensorpaar aus erster Lichtquelle 12 und erstem Sensor 16 daher in einer anderen Ebene angeordnet als das zweite Lichtquellen-Sensorpaar aus zweiter Lichtquelle 18 und zweitem Sensor 22. Die Ebenen der Lichtquellen-Sensorpaare sind in Längsrichtung des Produkts 10 versetzt, in Figur 3 also in die Zeichenebene hinein.

Die Einzellichtquellen 14, 20 der ersten bzw. zweiten Lichtquelle 12, 18 senden in dem dargestellten Beispiel jeweils über einen großen Winkelbereich diffuses Licht auf den Messbereich bzw. das darin angeordnete Produkt 10 aus. Die Einzellichtquellen 14, 20 können während einer Messung konstant und mit gleichbleibender und insbesondere gleicher Intensität Licht aussenden. Beispielsweise können die Einzellichtquellen 14, 20 Licht im Infrarot-Frequenzbereich aussenden. Die Einzellichtquellen 14, 20 können beispielsweise durch LEDs oder Laserdioden gebildet sein. Die ersten und zweiten Sensoren 16, 22 können Fotodetektoren sein, beispielsweise CCD-Sensoren oder ausgedehnte Fotodioden. Sie erfassen die Quantität des von der ersten und zweiten Lichtquelle 18 abgestrahlten Lichts nach Durchstrahlen des Messbereichs, in dem sich das Produkt 10 befindet. Die Sensoren 16, 22 erfassen also lediglich die Gesamtmenge des auftreffenden Lichts der Lichtquellen 12 bzw. 18. Es wird insbesondere kein fokussiertes Bild des Schattenwurfs des Produkts 10 auf den Sensoren 16, 22 abgebildet und ausgewertet.

Es ist möglich, dass dem ersten und/oder zweiten Sensor 16, 22 ein Spektralfilter zum Ausfiltern von Umgebungslicht und/oder ein Frequenzfilter zum Ausfiltern eines Frequenzbereichs des empfangenen Lichts zugeordnet ist. Auf diese Weise kann sichergestellt werden, dass beispielsweise der erste Sensor 16 nur Licht von der ersten Lichtquelle 12 erfasst und der zweite Sensor 20 nur Licht von der zweiten Lichtquelle 18.

Es ist auch möglich, dass das von der ersten und/oder zweiten Lichtquelle 12, 18 abgestrahlte Licht moduliertes Licht ist, und dass das von dem ersten und/oder zweiten Sensor 16, 22 empfangene Messsignal entsprechend demoduliert ist. Auch möglich ist es, dass das Licht der Einzellichtquellen 14, 20 der ersten bzw. zweiten Lichtquelle 12, 18 unterschiedlich moduliert ist, und dass das von dem ersten und/oder zweiten Sensor empfangene Messsignal unterschiedlich demodulierbar ist.

Die Messsignale des ersten und zweiten Sensors 16, 22 liegen weiterhin an einer Auswerteeinrichtung 24 an, die eine Änderung der von dem ersten bzw. zweiten Sensor 16, 22 erfassten Lichtmenge während des Förderns des Produkts 10 durch den Messbereich als eine Fehlstelle des Produkts 10 erkennt. Im Gegensatz zu dem in Figur 1 dargestellten Stand der Technik erfolgt erfindungsgemäß mittels der Lichtquellen 12, 18 ein diffuses Bestrahlen des Messbereichs bzw. des darin angeordneten Produkts 10 mit Licht über den gesamten Umfang des Produkts 10, also über einen Winkelbereich von 360°. Damit sind im Gegensatz zu dem oben erläuterten Stand der Technik Fehlstellen unabhängig von ihrer Position am Umfang des Produkts 10 in einfacher Weise detektierbar.

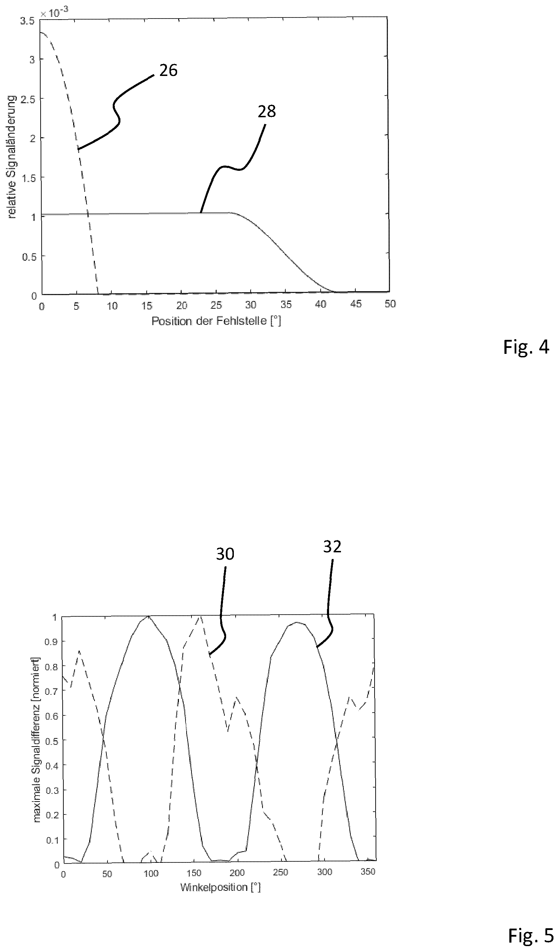

Dies soll anhand der Figuren 4 und 5 näher erläutert werden. In Figur 4 ist gestrichelt die relative Signaländerung 26 abhängig von einer Position der Fehlstelle in Grad über dem Umfang des Produkts 10 aufgetragen, wie sie sich bei einer Vorrichtung nach Figur 1 ergibt. In durchgezogener Linie ist in Figur 4 die entsprechende relative Signaländerung 28 über der Winkelposition der Fehlstelle in Grad eingezeichnet, wie sie sich mit dem erfindungsgemäßen Ansatz ergibt. Die relative Signaländerung 26 wurde für eine idealisierte kollimierte Lichtquelle aufgetragen und die relative Signaländerung 28 für eine idealisierte diffuse Lichtquelle, die also von jedem Punkt der Lichtquelle ausgehend jeden Ort des Sensors gleich stark beleuchtet. Die Höhe der Fehlstelle liegt bei einem Hundertstel des Radius des Produkts 10. Dabei ist erkennbar, dass mit dem erfindungsgemäßen Ansatz eine auswertbare relative Signaländerung durch eine Fehlstelle über einen erheblich größeren Winkelbereich über den Umfang des Produkts möglich ist.

Figur 4 zeigt diesen Zusammenhang dabei für ein einziges Paar aus diffuser Lichtquelle und Sensor, das im Übrigen eine geringere Ausdehnung aufweist als bei dem Ausführungsbeispiel nach Figur 3. Mit größeren Lichtquellen und Sensoren bzw. geringerem Abstand dieser kann der erfindungsgemäß detektierbare Winkelbereich weiter vergrößert werden. Mit der in Figur 3 dargestellten Ausgestaltung mit zwei Sensor-Lichtquellen-Paaren ist wie erläutert eine Abdeckung über den gesamten Umfang des Produkts 10 möglich.

Dies soll anhand des Diagramms der Figur 5 aufgezeigt werden, dass experimentelle Daten zu der in Figur 3 dargestellten Vorrichtung zeigt. In diesem Fall ist die durch eine Fehlstelle erzeugte maximale Signaldifferenz (normiert) über der Winkelposition der Fehlstelle über den Umfang des Produkts 10 in Grad für die beiden Paare aus erster Lichtquelle 12 und erstem Sensor 16 sowie zweiter Lichtquelle 18 und zweitem Sensor 22 aufgetragen. Die in Figur 5 gestrichelt eingezeichnete Signaldifferenz 30 zeigt die durch den ersten Sensor 16 erfasste Quantität der von der ersten Lichtquelle 12 empfangenen Lichtstrahlung. Die in Figur 5 als durchgehende Linie eingezeichnete maximale Signaldifferenz 32 zeigt entsprechend die durch den zweiten Sensor 22 erfasste Quantität der von der zweiten Lichtquelle 18 empfangenen Lichtstrahlung, jeweils nach Durchstrahlen des Messbereichs mit daran angeordnetem Produkt 10. Für den Versuch wurde das Produkt 10 mit einer Fehlstelle präpariert und die Änderung der durch die Sensoren 16 bzw. 22 empfangenen Lichtmenge beim Fördern des Produkts 10 mit der Fehlstelle durch den Messbereich in Abhängigkeit von der Ausrichtung des Produkts, insbesondere der Winkelposition der Fehlstelle, gemessen. In Figur 5 nicht dargestellt ist ein durch die Sensoren 16 bzw. 22 empfangener Signalhintergrund, der durch Rauschen bzw. Unregelmäßigkeiten auf dem Produkt 10 hervorgerufen wird. Dieser bewegt sich in dem Beispiel der Figur 5 im Bereich einer maximalen Signaldifferenz (normiert) zwischen 0,1 und 0,2. In dem Diagramm der Figur 5 zu erkennen ist, dass bei jeder Winkelposition der Fehlstelle über den Umfang des Produkts 10 mindestens einer der Sensoren 16, 22 eine signifikante auswertbare Änderung der empfangenen Lichtmenge erfasst, die durch die Auswerteeinrichtung 24 zuverlässig als Fehlstelle auf dem Produkt 10 erkannt werden kann.

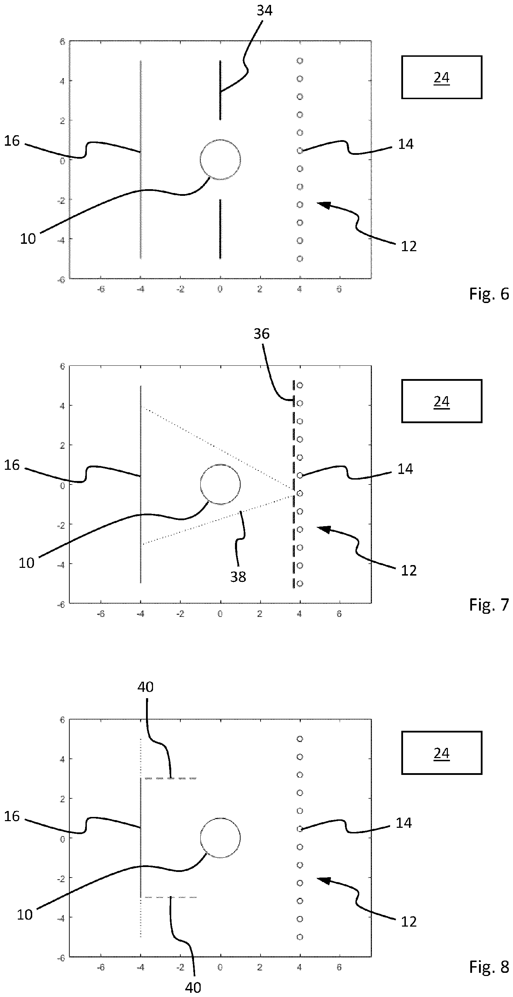

Anhand der Figuren 6 bis 9 sollen weitere mögliche Ausgestaltungen der erfindungsgemäßen Vorrichtung erläutert werden. Dabei ist aus Veranschaulichungsgründen nur ein Paar aus erster Lichtquelle 12 und erstem Sensor 16 dargestellt. Es versteht sich, dass die Ausgestaltungen auch mit mehreren Sensor-Lichtquellen-Paaren, wie in Figur 3 gezeigt, einsetzbar sein können.

Wie in dem Diagramm der Figur 4 zu erkennen, verringert sich durch die erfindungsgemäße Auswertung der Lichtmenge im Gegensatz zu einer scharfen Abbildung des Schattenwurfs mit kollimiertem Licht, wie im Stand der Technik, der Kontrast bei der Erkennung von Fehlstellen. Um diesem Problem entgegenzuwirken, ist in Figur 6 in der Messebene eine den Messbereich mit dem darin angeordneten Produkt 10 begrenzende Blende 34 angeordnet, die beispielsweise schlitzförmig ausgebildet sein kann. Die Blende 34 blendet außerhalb eines gewünschten Messbereichs verlaufende Lichtwege aus, sodass der erste Sensor 16 nur das gewünschte Nutzsignal, insbesondere durch eine Fehlstelle hervorgerufene Änderungen, empfängt. Auf diese Weise kann der Kontrast für die Erkennung einer Fehlstelle erhöht werden.

Bei dem Ausführungsbeispiel nach Figur 7 sind anstelle der in der Messebene des Messbereichs angeordneten Blende 34 den Einzellichtquellen 14 zugeordnete einzelne Blenden 36 vorgesehen, die jeweils dafür sorgen, dass die Einzellichtquellen 14 nur in einem begrenzten Bereich in den Messbereich mit dem darin angeordneten Produkt 10 abstrahlen, wie in Figur 7 für eine der Einzellichtquellen 14 bei dem Bezugszeichen 38 veranschaulicht. Auch durch diese Blendenanordnung lässt sich das Nutzsignal im Vergleich zu dem Gesamtsignal und damit der Kontrast relativ erhöhen. Beispielsweise die Blende 34 kann sich auch in Förderrichtung des Produkts 10 erstrecken.

Bei dem Ausführungsbeispiel nach Figur 8 weist der erste Sensor 14 im Vergleich zu den zuvor besprochenen Ausgestaltungen eine geringere Ausdehnung in der ersten Sensorausdehnungsrichtung auf. Weiterhin sind an den Enden der Ausdehnung des ersten Sensors 14 in dem dargestelltem Beispiel jeweils senkrecht zur ersten Sensorausdehnungsrichtung angeordnete Spiegel 40 vorgesehen, die Licht zu dem ersten Sensor 14 reflektieren und diesen dadurch effektiv vergrößern, da erfindungsgemäß nur die erfasste Lichtmenge ausgewertet wird.

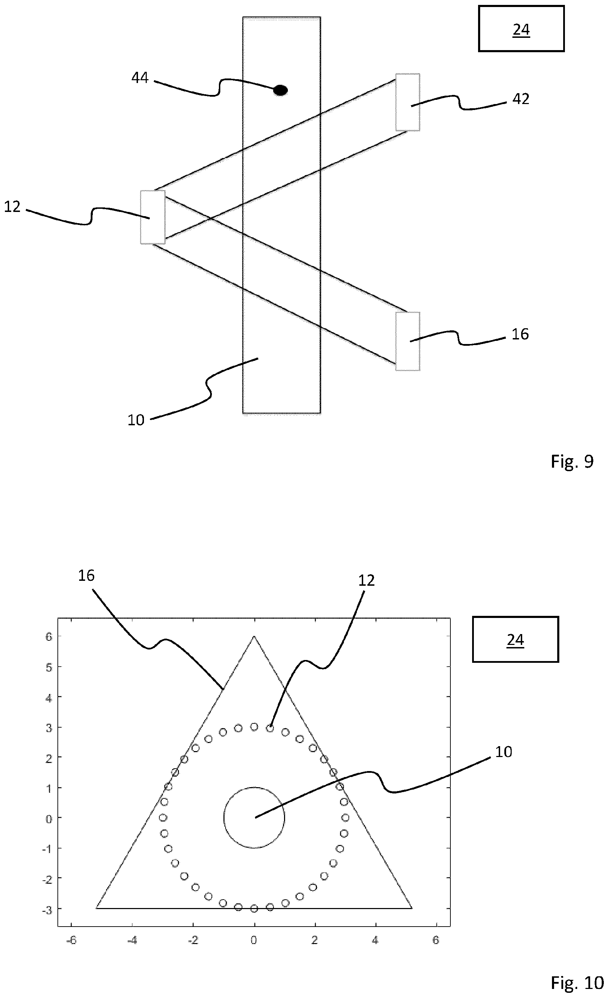

In Figur 9 ist eine Ansicht von oben auf das in Figur 9 beispielsweise von unten nach oben geförderte strangförmige Produkt 10 dargestellt. Dabei ist zu erkennen, dass in Förderrichtung des Produkts 10 stromab zu dem ersten Sensor 16 ein weiterer Sensor 42 vorgesehen ist, der ebenfalls die Quantität des von der ersten Lichtquelle 12 abgestrahlten Lichts nach Durchstrahlen des Messbereichs mit darin angeordnetem Produkt 10 erfasst. Der weitere Sensor 42 kann ausgebildet sein wie der erste Sensor 16. Durchläuft in diesem Fall eine Fehlstelle 44 des Produkts 10 den Messbereich, wird zunächst der erste Sensor 16 und zu einem etwas späteren Zeitpunkt der zweite Sensor 42 eine entsprechende Änderung der erfassten Lichtmenge feststellen. Die Auswerteeinrichtung 24 kann in diesem Fall ein Differenzsignal des ersten Sensors 16 und des weiteren Sensor 42 auswerten, um beispielsweise unerwünschte Effekte aufgrund von Umgebungslicht zu eliminieren.

Bei dem Ausführungsbeispiel nach Figur 10 erstreckt ist die erste Lichtquelle 12 aus sich entlang einer Kreisform um das Produkt 10 herum erstreckenden Einzellichtquellen aufgebaut. Der erste Sensor 16 weist drei sich jeweils entlang einer Geraden erstreckende Sensorabschnitte auf, die ein gleichseitiges Dreieck bilden. Die Längsachse des Produkts 10 verläuft durch das Zentrum des durch die erste Lichtquelle 12 gebildeten Kreises bzw. des durch den ersten Sensor 16 gebildeten Dreiecks. Die erste Lichtquelle 12 ist in einer ersten, senkrecht zur Längsrichtung des Produkts 10 ausgerichteten Ebene angeordnet. Der erste Sensor 16 ist in einer in Längsrichtung des Produkts 10 zur ersten Ebene versetzten zweiten, ebenfalls senkrecht zur Längsrichtung des Produkts 10 ausgerichteten Ebene angeordnet. Die Ebenen sind in Figur 10 also in die Zeichenebene hinein versetzt. Wie oben erläutert, kann mit dieser Ausgestaltung in bauraumsparender Weise eine vollständige Vermessung des Produkts 10 über seinen gesamten Umfang erfolgen.

### Bezugszeichenliste

- 10: Produkt
- 12: Erste Lichtquelle
- 14: Einzellichtquellen
- 16: Erster Sensor
- 18: Zweite Lichtquelle
- 20: Einzellichtquellen
- 22: Zweiter Sensor
- 24: Auswerteeinrichtung
- 26: Signaländerung
- 28: Signaländerung
- 30: Signaldifferenz
- 32: Signaldifferenz
- 34: Blende
- 36: Blende
- 38: Bereich
- 40: Spiegel
- 42: Weiterer Sensor
- 44: Fehlstelle
- 100: Produkt
- 102: Lichtquelle
- 104: Licht
- 106: Detektor
- 108: Fehlstelle
- 110: Fehlstelle

## Patentansprüche

1. Vorrichtung zum Detektieren von Fehlstellen (44) an einem in einem Messbereich der Vorrichtung angeordneten strangförmigen Produkt (10), **dadurch gekennzeichnet, dass** die Vorrichtung eine in einer ersten Ausdehnungsrichtung ausgedehnte erste Lichtquelle (12) aufweist, die ausgehend von einer Vielzahl von Orten entlang der ersten Ausdehnungsrichtung Licht, vorzugsweise sichtbares Licht oder Infrarotlicht, diffus auf den Messbereich abstrahlt, dass die Vorrichtung weiter einen ersten Sensor (16) aufweist, der die Quantität des von der ersten Lichtquelle (12) abgestrahlten Lichts nach Durchstrahlen des Messbereichs erfasst, und dass eine Auswerteeinrichtung (24) vorgesehen ist, die dazu ausgebildet ist, eine Änderung der von dem ersten Sensor (16) erfassten Quantität des Lichts als Fehlstelle (44) des Produkts (10) zu erkennen.

2. Vorrichtung nach Anspruch 1, **dadurch gekennzeichnet, dass** die erste Lichtquelle (12) eine sich in der ersten Ausdehnungsrichtung erstreckende flächige Lichtquelle (12) und/oder eine Mehrzahl von in der ersten Ausdehnungsrichtung nebeneinander angeordnete Einzellichtquellen (14) umfasst.

3. Vorrichtung nach einem der vorhergehenden Ansprüche, **dadurch gekennzeichnet, dass** der erste Sensor (16) sich in einer ersten Sensorausdehnungsrichtung erstreckt, vorzugsweise auf einer der ersten Lichtquelle (12) gegenüberliegenden Seite des Messbereichs.

4. Vorrichtung nach einem der vorhergehenden Ansprüche, **dadurch gekennzeichnet, dass** die Vorrichtung weiterhin eine sich in einer zweiten Ausdehnungsrichtung erstreckende zweite Lichtquelle (18) umfasst, die ausgehend von einer Vielzahl von Orten entlang der zweiten Ausdehnungsrichtung Licht, vorzugsweise sichtbares Licht oder Infrarotlicht, diffus auf den Messbereich abstrahlt, dass die Vorrichtung weiter einen zweiten Sensor (22) aufweist, der die Quantität des von der zweiten Lichtquelle (18) abgestrahlten Lichts nach Durchstrahlen des Messbereichs erfasst, und dass die Auswerteeinrichtung (24) dazu ausgebildet ist, eine Änderung der von dem zweiten Sensor (22) erfassten Quantität des Lichts als Fehlstelle (44) des Produkts (10) zu erkennen.

5. Vorrichtung nach Anspruch 4, **dadurch gekennzeichnet, dass** die erste und zweite Lichtquelle (12, 18) ein im Messbereich angeordnetes Produkt über einen Winkelbereich von mindestens 270°, vorzugsweise von 360°, über den Umfang des Produkts diffus mit Licht bestrahlen.

6. Vorrichtung nach einem der vorhergehenden Ansprüche, **dadurch gekennzeichnet, dass** sie weiterhin eine Fördereinrichtung umfasst, die das strangförmige Produkt (10) während der Messung entlang einer Förderrichtung durch den Messbereich fördert.

7. Vorrichtung nach Anspruch 6, **dadurch gekennzeichnet, dass** die Vorrichtung weiterhin einen in Förderrichtung des strangförmigen Produkts (10) stromab des ersten Sensors (16) angeordneten weiteren Sensor (42) aufweist, der ebenfalls die Quantität des von der ersten Lichtquelle (12) abgestrahlten Lichts nach Durchstrahlen des Messbereichs erfasst, und dass die Auswerteeinrichtung (24) dazu ausgebildet ist, ein Differenzsignal des ersten Sensors (16) und des weiteren Sensors (42) auszuwerten.

8. Vorrichtung nach einem der vorhergehenden Ansprüche, **dadurch gekennzeichnet, dass** die erste Lichtquelle (12) sich über den gesamten Umfang des Messbereichs erstreckt, vorzugsweise kreisförmig um den Messbereich erstreckt, und dass der erste Sensor (16) sich über den gesamten Umfang des Messbereichs erstreckt, vorzugsweise dreiecksförmig um den Messbereich erstreckt, wobei sich die erste Lichtquelle (12) und der erste Sensor (16) in unterschiedlichen Ebenen erstrecken, insbesondere versetzt in Längsrichtung des Produkts (10).

9. Vorrichtung nach einem der vorhergehenden Ansprüche, **dadurch gekennzeichnet, dass** eine Blende (34, 36) vorgesehen ist, die einen Teil des von der ersten und/oder zweiten Lichtquelle (12, 18) abgestrahlten Lichts ausblendet, so dass dieses den ersten und/oder zweiten Sensor (16, 22) nicht erreicht.

10. Vorrichtung nach Anspruch 9, **dadurch gekennzeichnet, dass** die Blende (34) den Messbereich begrenzt und/oder dass eine Mehrzahl von Einzellichtquellen der ersten und/oder zweiten Lichtquelle (12, 18) zugeordneten Blenden (36) vorgesehen ist, die einen Teil des von der ersten und/oder zweiten Lichtquelle (12, 18) abgestrahlten Lichts ausblenden, so dass dieses den ersten und/oder zweiten Sensor (16, 22) nicht erreicht und/oder dass die Blende (34) in Längsrichtung des strangförmigen Produkts (10) angeordnet ist.

11. Vorrichtung nach einem der vorhergehenden Ansprüche, **dadurch gekennzeichnet, dass** dem ersten und/oder zweiten Sensor (16, 22) ein Spektralfilter zum Ausfiltern von Umgebungslicht zugeordnet ist und/oder dass dem ersten und/oder zweiten Sensor (16, 22) ein Frequenzfilter zum Ausfiltern eines Frequenzbereichs des empfangenen Lichts zugeordnet ist.

12. Vorrichtung nach einem der vorhergehenden Ansprüche, **dadurch gekennzeichnet, dass** das von der ersten und/oder zweiten Lichtquelle (12, 18) abgestrahlte Licht moduliertes Licht ist, und dass das von dem ersten und/oder zweiten Sensor (16, 22) empfangene Messsignal entsprechend demodulierbar ist.

13. Vorrichtung nach einem der vorhergehenden Ansprüche, **dadurch gekennzeichnet, dass** die erste Lichtquelle (12) eine Mehrzahl von in der ersten Ausdehnungsrichtung nebeneinander angeordneten Einzellichtquellen (14) umfasst und/oder dass die zweite Lichtquelle (18) eine Mehrzahl von in der zweiten Ausdehnungsrichtung nebeneinander angeordneten Einzellichtquellen (20) umfasst, dass das Licht unterschiedlicher Einzellichtquellen (14, 20) unterschiedlich moduliert ist, und dass das das von dem ersten und/oder zweiten Sensor (16, 22) empfangene Messsignal unterschiedlich demodulierbar ist.

14. Vorrichtung nach einem der vorhergehenden Ansprüche, **dadurch gekennzeichnet, dass** der erste Sensor (16) und/oder der zweite Sensor (22) einen Spiegel (40) aufweist, der Licht zu dem ersten Sensor (16) und/oder dem zweiten Sensor (22) reflektiert.

15. Verfahren zum Detektieren von Fehlstellen (44) an einem strangförmigen Produkt (10) unter Verwendung einer Vorrichtung nach einem der vorhergehenden Ansprüche.
